# EUROPÄISCHE PATENTANMELDUNG

(11) **EP 0 952 651 A1**
(43) Veröffentlichungstag der Anmeldung: **27.10.1999**
(21) Anmeldenummer: 99100919.2
(22) Anmeldetag: 20.01.1999
(51) Int. Cl.: H02G 1/12, G02B 6/44

(54) **Schneidevorrichtung**

(30) Priorität: 22.04.1998 DE 29807261 U
(71) Anmelder: REHAU AG + Co, 95111 Rehau (DE)
(72) Erfinder: Beyer, Wolfgang, 95111 Rehau (DE)

(57) **Zusammenfassung**

Die Erfindung betrifft eine Vorrichtung zum Öffnen oder Anschneiden ein- oder mehrschichtiger Schutzrohre, Kabelmäntel und dergleichen aus gleichen oder unterschiedlichen Materialien. Diese besteht aus einer Einrichtung zur Führung der Schutzrohre, Kabelmäntel und dergleichen, die durch ein Oberteil und ein Unterteil ausgebildet ist Weiterer bestandteil ist ein zweiteiliger Griff, dessen beide Griffteile beweglich miteinander verbunden sind und einer durch das Verschwenken der beiden Griffteile zueinander zwischen dem Oberteil und dem Unterteil der Führung entstehenden Öffnung. Diese Vorrichtung ist in der Lage, Faserbündeladerhüllen mit Durchmessern bis zu 11 mm, wobei die Aderhülle besonders dickwandig und aus steifen Materialien besteht, sicher, reproduzierbar und ohne großen Kraftaufwand zu öffnen, um die innenliegenden optischen Fasern freizulegen.
Dies wird dadurch erreicht, daß diese Öffnung kreisförmig und der Innendurchmesser der Öffnung dem Außendurchmesser der Schutzrohre, Kabelmäntel und dergleichen entspricht und daß das Oberteil und das Unterteil als Kreisräder ausgebildet sind. In die Stirnflächen sind radial halbkreisförmige Vertiefungen eingebracht, wobei sich in wenigstens einem Kreisrad ein Kreismesser befindet, welches in die radiale Vertiefung hineinragt. Der Abstand vom höchsten Punkt des Kreismessers bis zum tiefsten Punkt der radialen Vertiefung entspricht der Wanddicke der Schutzrohre, Kabelmäntel und dergleichen.

## Beschreibung

Die Erfindung betrifft eine Vorrichtung zum Öffnen oder Anschneiden ein- oder mehrschichtiger Schutzrohre, Kabelmäntel und dergleichen aus gleichen oder unterschiedlichen Materialien, bestehend aus einer Einrichtung zur Führung der Schutzrohre, Kabelmäntel und dergleichen, die durch ein Oberteil und ein Unterteil ausgebildet ist, einem zweiteiligen Griff, dessen beide Griffteile beweglich miteinander verbunden sind, und einer durch das Verschwenken der beiden Griffteile zueinander zwischen dem Oberteil und dem Unterteil der Führung entstehenden Öffnung.

Eine gattungsgemäße Vorrichtung ist aus der DE 42 36 251 A1 bekannt. Dort ist ein Schneidwerkzeug für Faserbündeladerhüllen beschrieben, welches eine mit einer Nut versehene Basis besitzt, in deren Nut die Faserbündeladerhülle eingesetzt wird. Über der Nut mit der Faserbündeladerhülle wird ein Messer mit nach oben gerichteter Schneide installiert, und mit diesem Messer werden die über dem Nutrand vorstehenden Teilbereiche der Faserbündeladerhülle bei deren Längsdurchziehen durch die Nut abgeschält und die Faserbündeladerhülle damit geöffnet. Durch Krümmen der nur noch teilweise schutzumhüllten Ader kann die Faser von der verbliebenen Schutzhülle befreit werden. Die Nut kann bei dieser bekannten Vorrichtung durch Auflegen von Distanzscheiben auf die Basis zur Aufnahme von Faserbündeladerhüllen mit größerem Durchmesser angepaßt werden. Nachteilig bei dieser Vorrichtung ist jedoch das umständliche und zeitaufwendige Einführen bereits verlegter Faserbündeladerhüllen. Das Öffnen von Faserbündeladerhüllen ist zwar möglich, jedoch bedarf es hierzu eines nicht unerheblichen Kraftaufwandes, um Faserbündeladerhüllen in einer Länge von ca. 1 bis 2 m zu öffnen. Des weiteren muß bei dem Schneidvorgang die Faserbündeladerhülle die gesamte zu schneidende Länge in Achsrichtung gezogen werden.

Eine weitere gattungsgemäße Vorrichtung ist aus dem deutschen Gebrauchsmuster G 295 18 100.1 bekannt. Diese Vorrichtung soll es auch dem ungelernten Monteur ermöglichen, Faserbündeladerhüllen zur Entnahme einzelner Lichtwellenleiterfasern gefahrlos, einfach und mit reproduzierbaren Ergebnissen anzuschneiden und zu öffnen.

Dieses Schneidwerkzeug besteht aus einem zweiteiligen Griff, dessen beiden Griffteile gelenkig miteinander verbunden sind. Am ersten Griffteil sind über einen Zangenbacken eine Grundplatte mit Nutenöffnung fest und bewegliche Klemmbacken verschwenkbar angelenkt. Am zweiten Griffteil ist am freien Ende eines Zangenbackens ein Druckelement mit einer Messerklinge angeordnet. Durch Verschwenken des ersten Griffteils zum zweiten Griffteil erfolgt die Zustellung der auf dem Druckelement befestigten Messerklinge in die Anschnittposition.

Vorteilhaft wird hier gesehen, daß alle zum Anschnitt der Faserbündeladerhüllen benötigten Teile fest mit dem Schneidwerkzeug verbunden sind. So ist zum Öffnen der Faserbündeladerhülle eine Einhandbedienung möglich, da das Schneidwerkzeug nach dem Prinzip eines verrastenden Griffzangenverschlusses gewählt wurde.

Nachteilig bei dieser Vorrichtung ist jedoch, daß sie sich nur zum Öffnen bzw. Anschneiden von Faserbündeladerhüllen mit einem Durchmesser bis 4,2 mm eignet. Der bekannte Stand der Technik erfordert aber das Öffnen bzw. Anschneiden von Faserbündeladerhüllen mit Durchmessern von bis zu 10 mm und mehr. Diese Maxibündeladerhüllen müssen durch ihren Zentraladeraufbau einen Großteil der Kabelstabilität bereitstellen, so daß die Wandstärken dieser Maxibündeladerhüllen relativ hoch und noch dazu aus stärkeren Materialien, z.B. Polypropylen, Polycarbonat oder Polybutylentherphthalat, gefertigt sind.

Bedingt durch die Größenverhältnisse von Durchmesser zu Wandstärke und der verwendeten steiferen Materialien bei den im bekannten Stand der Technik eingesetzten Maxibündeladerhüllen können die oben beschriebenen Vorrichtungen nicht verwendet werden. Die hier erforderlichen Preß- und Zugkräfte sind viel zu hoch, so daß eine praxisgerechte Anwendung dieser Vorrichtungen bei diesen Maxibündeladerhüllen bezüglich Arbeitssicherheit, Reproduzierbarkeit und Ergonomie nicht möglich ist.

Hier setzt die Erfindung ein, die es sich zur Aufgabe gestellt hat, Faserbündeladerhüllen mit Durchmessern bis zu 11 mm, wobei die Maxibündeladerhülle besonders dickwandig und aus steifen Materialien besteht, sicher, reproduzierbar und ohne großen Kraftaufwand zu öffnen, um die innenliegenden optischen Fasern freizulegen.

Erfindungsgemäß wird dazu vorgeschlagen, daß eine Öffnung, die durch das Verschwenken der beiden Griffteile zwischen dem Oberteil und dem Unterteil der Führung entsteht, kreisförmig und der Innendurchmesser der Öffnung gleich dem Außendurchmesser der Schutzrohre, Kabelmäntel und dergleichen entspricht, daß das Oberteil und das Unterteil als Kreisräder ausgebildet sind, an deren Stirnfläche radial eine halbkreisförmige Vertiefung eingebracht ist, daß sich wenigstens in einem Kreisrad ein Kreismesser befindet, welches in die radiale Vertiefung hineinragt, und daß der Abstand vom höchsten Punkt des Kreismessers zum tiefsten Punkt der radialen Vertiefung wenigstens der Wanddicke der Schutzrohre, Kabelmäntel und dergleichen entspricht.

Durch die Verbindung von zwei Kreisrädern mit den entsprechenden Kreismessern sowie der umgreifenden Führung der Maxibündeladerhüllen im Werkzeug kann eine Beschädigung der innenliegenden optischen Fasern ausgeschlossen werden, da die Kreismesser nur in die Maxibündeladerhülle eintauchen und keine nennenswerte Axialbewegung zu den Fasern ausführen. Bei dieser Vorrichtung werden die Kreismesser nicht über die Fasern gezogen, sondern gerollt. Diese Bewegung wird dadurch realisiert, daß in einer bevorzugten Ausführung in wenigstens einer radialen Vertiefung des Kreisrades axiale Erhebungen und Vertiefungen angeordnet sind.

Ein weiterer Vorteil der erfindungsgemäßen Vorrichtung wird darin gesehen, daß der Anschnitt der Maxibündeladerhülle in der dem jeweiligen Einsatzzweck erforderlichen optimalen Art und Weise erfolgen kann.

Falls einzelne optische Fasern aus der Maxibündeladerhülle entnommen werden sollen, bietet sich der Parallelschnitt an, bei dem in einer weiteren bevorzugten Ausführung im Oberteil oder im Unterteil wenigstens zwei Kreismesser parallel zueinander angeordnet sind. Durch diese Anordnung wird nur ein schmaler Streifen aus der Maxibündeladerhülle angeschnitten und herausgetrennt, ohne daß die mechanische Stabilität der Maxibündeladerhülle mehr als notwendig verloren geht. Muß die Maxibündeladerhülle ganz entfernt werden, ist dies möglich durch eine weitere bevorzugte Ausführungsform, bei der im Oberteil und im Unterteil Kreismesser einander gegenüberliegend angeordnet sind. Damit kann die Maxibündeladerhülle in Längsrichtung halbiert und leicht von den optischen Fasern entfernt werden.

Ein entscheidender Vorteil dieser Vorrichtung wird darin gesehen, daß die drehbar auf Achsen gelagerten Ober- und Unterteile wechselbar sind. Dadurch ist es möglich, neben den beschriebenen verschiedenen Anschnittechniken auch alle derzeit verfügbaren Maxibündeladerhüllen verschiedenster Durchmesser problemlos und dauerhaft zu bearbeiten. Der problemlose Transport der Maxibündeladerhüllen durch die Öffnung aus Ober- und Unterteil wird dadurch realisiert, daß diese über mechanische Elemente miteinander verbunden sind. Dadurch wird erreicht, daß bei Rotation um die Achsen sich das Oberteil gegenläufig zu dem Unterteil bewegt. Diese Bewegung kann initiiert werden durch beispielsweise ein Handrad, welches an einer verlängerten Achse aufgesteckt wird. In einer weiteren bevorzugten Ausführungsform kann an diese längere Achse eine Antriebseinheit angelenkt werden.

Die Erfindung wird in den folgenden Figuren schematisch dargestellt. Es zeigt
- Figur 1: eine Seitenansicht der Vorrichtung im geöffneten Zustand.
- Figur 2: eine Vorderansicht der als Kreisräder ausgebildeten Ober- und Unterteile.
- Figur 3: eine weitere Vorderansicht der als Kreisräder ausgebildeten Ober- und Unterteile.
- Figur 4: eine Vorderansicht der als Kreisräder ausgebildeten Ober- und Unterteile mit den Achsen und einer Antriebseinheit.

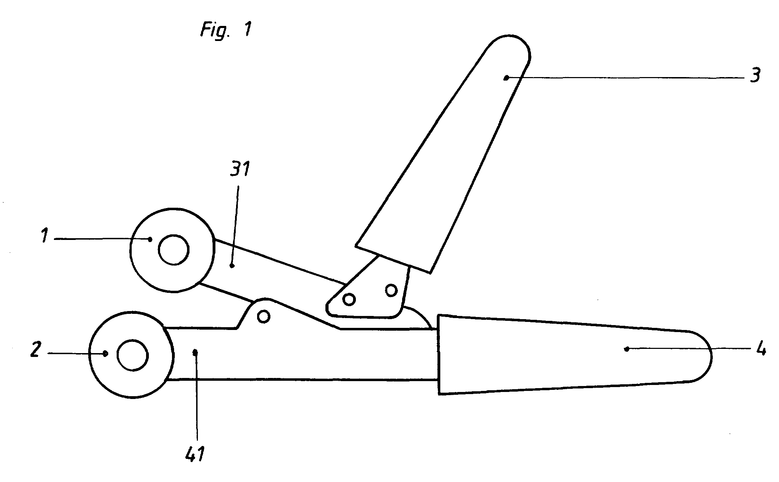

In Figur 1 ist die Seitenansicht der Vorrichtung im geöffneten Zustand dargestellt, wobei das Oberteil 1 und das Unterteil 2 voneinander beabstandet sind und durch Verschwenken der Griffteile 3,4 zueinander in den geschlossenen Zustand geführt werden.

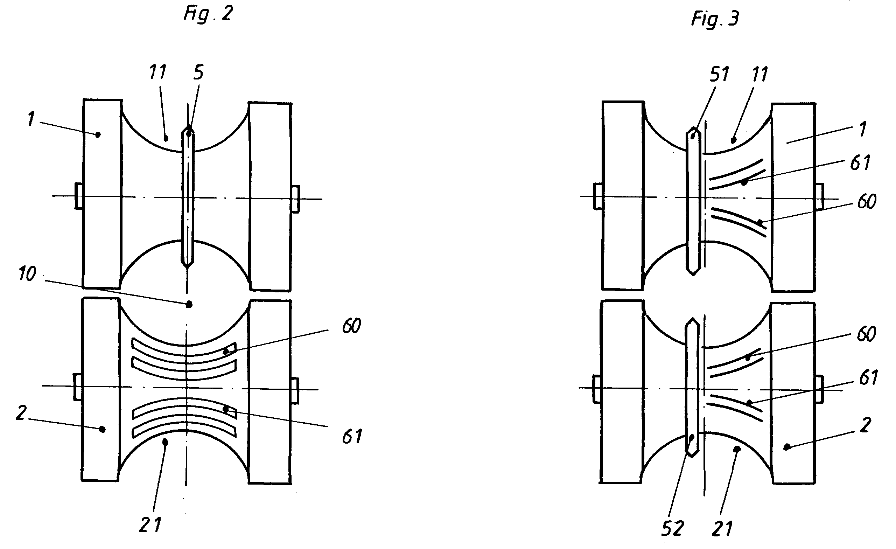

Die dabei entstehende Öffnung 10 ist in Figur 2 dargestellt. Zwischen dem Oberteil 1 und dem Unterteil 2 ist die Öffnung 10 zu erkennen, welche dem Außendurchmesser der Schutzrohre, Kabelmäntel und dergleichen entspricht.

Das Oberteil 1 und das Unterteil 2 sind als Kreisräder ausgebildet, an deren Stirnflächen die halbkreisförmige radiale Vertiefung 11, 21 eingebracht ist. In der hier dargestellten bevorzugten Ausführungsform befindet sich im Oberteil 1 ein Kreismesser 5, welches in die radiale Vertiefung 11 hineinragt. Der Abstand vom tiefsten Punkt der radialen Vertiefung 11 zu dem höchsten Punkt des Kreismessers 5 entspricht hierbei der Wanddicke der Schutzrohre, Kabelmäntel und dergleichen. Des weiteren sind im Unterteil 2 in der radialen Vertiefung 21 axiale Erhebungen 60 und Vertiefungen 61 angeordnet.

In Figur 3 ist die Vorderansicht einer weiteren bevorzugten Ausführungsform dargestellt, in der im Oberteil 1 und im Unterteil 2 Kreismesser 51, 52 angeordnet sind. Das Kreismesser 51 in der radialen Vertiefung 11 des Oberteiles 1 ist dem Kreismesser 52 in der radialen Vertiefung 21 des Unterteiles 2 gegenüberliegend angeordnet. Des weiteren sind in der radialen Vertiefung 11 des Oberteiles 1 und in der radialen Vertiefung 21 des Unterteiles 2 axiale Erhebungen 60 und Vertiefungen 61 angeordnet.

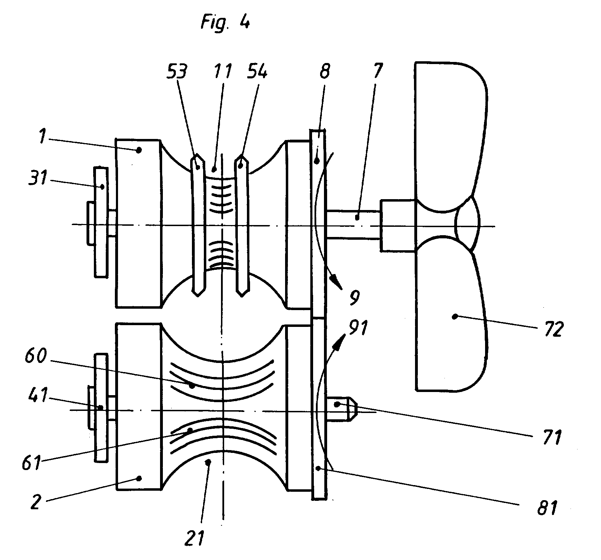

In der Vorderansicht der in Figur 4 dargestellten bevorzugten Ausführungsform sind zwei Kreismesser 53, 54 in der radialen Vertiefung 11 des Oberteiles 1 parallel zueinander angeordnet. Hier ist erkennbar, daß das Oberteil 1 und das Unterteil 2 an den freien Enden der beiden Griffteile 31, 41 drehbar auf Achsen 7, 71 gelagert sind.

Das drehbar auf der ersten Achse 7 gelagerte Oberteil 1 ist über die mechanischen Elemente 8, 81 mit dem drehbar auf der zweiten Achse 71 gelagerten Unterteil 2 verbunden. Durch die Rotationsbewegung 9, 91 der mechanischen Elemente 8, 81 wird das Oberteil 1 gegenläufig zu dem Unterteil 2 bewegt.
In dieser bevorzugten Ausführungsform ist die Achse 7 länger als die Achse 71 ausgeführt. An die längere Achse 7 wurde eine Antriebseinheit 72 angelenkt, welche in dieser bevorzugten Ausführungsform ein Handrad ist. In weiteren Ausführungsformen kann die Antriebseinheit 72 eine Handkurbel, ein Motor und dergleichen sein.

## Patentansprüche

1. Vorrichtung zum Öffnen oder Anschneiden ein- oder mehrschichtiger Schutzrohre, Kabelmäntel und dergleichen aus gleichen oder unterschiedlichen Materialien, bestehend aus einer Einrichtung zur Führung der Schutzrohre, Kabelmäntel und dergleichen, die durch ein Oberteil und ein Unterteil ausgebildet ist, einem zweiteiligen Griff, dessen beide Griffteile beweglich miteinander verbunden sind, und einer durch das Verschwenken der beiden Griffteile zueinander zwischen dem Oberteil und dem Unterteil der Führung entstehenden Öffnung,
dadurch gekennzeichet,
daß diese Öffnung (10) kreisförmig und der Innendurchmesser der Öffnung (10) dem Außendurchmesser der Schutzrohre, Kabelmäntel und dergleichen entspricht, daß das Oberteil (1) und das Unterteil (2) als Kreisräder ausgebildet sind, an deren Stirnfläche radial eine halbkreisförmige Vertiefung (11, 21) eingebracht ist, daß sich wenigstens in einem Kreisrad ein Kreismesser (5) befindet, welches in die radiale Vertiefung (11) hineinragt, und daß der Abstand vom höchsten Punkt des Kreismessers (5) bis zum tiefsten Punkt der radialen Vertiefung (11) der Wanddicke der Schutzrohre, Kabelmäntel und dergleichen entspricht.

2. Vorrichtung nach Anspruch 1, dadurch gekennzeichnet, daß in wenigstens einer radialen Vertiefung (21) eines Kreisrades axiale Erhebungen (60) und Vertiefungen (61) angeordnet sind.

3. Vorrichtung nach Anspruch 1, dadurch gekennzeichnet, daß im Oberteil (1) und im Unterteil (2) wenigstens zwei Kreismesser (51, 52) einander gegenüberliegend angeordnet sind.

4. Vorrichtung nach Anspruch 1, dadurch gekennzeichnet, daß im Oberteil (1) oder im Unterteil (2) wenigstens zwei Kreismesser (53, 54) parallel zueinander angeordnet sind.

5. Vorrichtung nach Anspruch 1, dadurch gekennzeichnet, daß das Oberteil (1) und das Unterteil (2) an den freien Enden der beiden Griffteile (31, 41) drehbar auf Achsen (7, 71) gelagert und wechselbar sind.

6. Vorrichtung nach Anspruch 1, dadurch gekennzeichnet, daß das drehbar auf der ersten Achse (7) gelagerte Oberteil (1) über mechanische Elemente (8, 81) mit dem drehbar auf der zweiten Achse (71) gelagerten Unterteil (2) verbunden ist.

7. Vorrichtung nach Anspruch 1, dadurch gekennzeichnet, daß die mechanischen Elemente (8, 81) bei Rotation (9, 91) um die Achsen (7, 71) das Oberteil (1) gegenläufig zu dem Unterteil (2) bewegen.

8. Vorrichtung nach Anspruch 1, dadurch gekennzeichnet, daß wenigstens eine der Achsen (7, 71) länger als die andere ist.

9. Vorrichtung nach Anspruch 1, dadurch gekennzeichnet, daß an die längere Achse (7) eine Antriebseinheit (72) angelenkt ist.
